(19) Europäisches Patentamt

European Patent Office

Office européen des brevets

(11) **EP 0 910 806 B1**

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(51) Int Cl.$^7$: **G01S 13/90**

(21) Anmeldenummer: **98922646.9**

(22) Anmeldetag: **04.04.1998**

(86) Internationale Anmeldenummer:
**PCT/EP98/01980**

(87) Internationale Veröffentlichungsnummer:
**WO 98/045726 (15.10.1998 Gazette 1998/41)**

(54) **VERFAHREN ZUR ÜBERWACHUNG DER ERDOBERFLÄCHE**

METHOD FOR MONITORING THE EARTH SURFACE

PROCEDE POUR SURVEILLER LA SURFACE DE LA TERRE

(84) Benannte Vertragsstaaten:
**DE FR GB IT SE**

(30) Priorität: **09.04.1997 DE 19714698**
**19.08.1997 DE 19735848**

(43) Veröffentlichungstag der Anmeldung:
**28.04.1999 Patentblatt 1999/17**

(73) Patentinhaber: **EADS Deutschland GmbH**
**85521 Ottobrunn (DE)**

(72) Erfinder: **NEUMANN, Christoph**
**D-89179 Beimerstretten (DE)**

(56) Entgegenhaltungen:
**EP-A- 0 449 303     DE-A- 4 427 657**
**DE-C- 4 311 754      US-A- 4 924 229**

EP 0 910 806 B1

**Beschreibung**

Die Erfindung geht aus von einem Verfahren zur Überwachung der Erdoberfläche nach dem Oberbegriff des Patentanspruchs 1.

In vielen Anwendungsfällen ist die Überwachung der Erdoberfläche erforderlich, wobei ein bewegtes Fluggerät, beispielsweise ein fliegendes Flugzeug oder ein fliegendes Luftschiff oder ein Satellit, verwendet wird. Soll diese Überwachung beispielsweise weitgehendst unabhängig sein von Wettereinflüssen, beispielsweise Wolken und/oder Nebel, so ist es zweckmäßig, in dem Fluggerät einen Radarsensor, dessen Blickrichtung auf die Erdoberfläche gerichtet ist, zu verwenden. Sollen bei der Überwachung hohe räumliche Auflösungen erreicht werden, so ist die Verwendung eines Radarsensors mit synthetischer Apertur zweckmäßig. Dieser wird beispielsweise im sogenannten SAR- oder DBS-Mode (Betriebsart) betrieben. Für eine derartige Radar-Überwachung ist es erforderlich, daß insbesondere die Flugparameter, beispielsweise Flughöhe, Flugweg, Fluggeschwindigkeit, des Fluggerätes immer bekannt sind, denn nur dann können zeitlich aufeinanderfolgend aufgenommene Radarbilder gemäß dem synthetischen Aperturverfahren mit vorgebbarer Genauigkeit ausgewertet werden ohne daß Fehler und/oder Störungen, beispielsweise unscharfe Bilder, entstehen. Die erwähnten Flugparameter können beispielsweise mittels eines INS-Gerätes (Inertial Navigation System) ermittelt werden.

Ein derartiges Verfahren ist in nachteiliger Weise technisch aufwendig und kostenungünstig, denn es muß ein eigenständiges Gerät, das INS-Gerät, verwendet werden, um diejenigen Parameter, die insbesondere für SAR-Radarbilder benötigt werden, zu ermitteln.

DE 4427657 A zeigt ein auto Fokussierendes System für SAR.

Der Erfindung liegt daher die Aufgabe zugrunde, ein gattungsgemäßes Verfahren anzugeben, mit dem in kostengünstiger Weise eine automatische Fokussierung von Radarbildern, die mittels eines Radarsensors mit synthetischer Apertur erzeugt werden, ermöglicht wird.

Diese Aufgabe wird gelöst durch die in dem kennzeichnenden Teil des Patentanspruchs 1 angegebenen Merkmale. Vorteilhafte Ausgestaltungen und/oder Weiterbildungen sind den weiteren Ansprüchen entnehmbar.

Die Erfindung wird im folgenden anhand eines Ausführungsbeispiels unter Bezugnahme auf schematisch dargestellte Figuren näher erläutert. Es zeigen

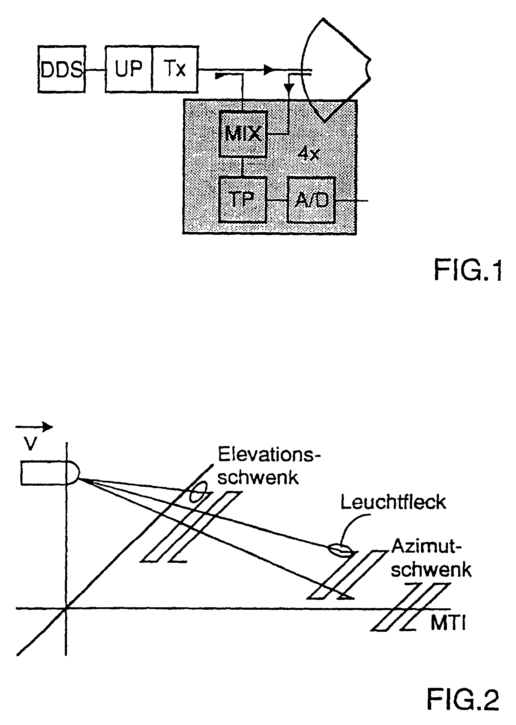

Fig.1 bis Fig.7 schematische Diagramme zur Erläuterung der Erfindung

Die Erfindung beruht auf der Erkenntnis, daß es möglich ist, aus dem von dem Radarsensor ausgewerteten Radarsignal auf der Sichtlinie, das heißt der Verbindungslinie zwischen dem Radarsensor und dem Leuchtfleck der Antenne auf der Erdoberfläche, die Geschwindigkeit und die Beschleunigung zu bestimmen. Diese entstehen aufgrund von Relativbewegungen des Radarsensors gegenüber der Erdoberfläche, insbesondere bei einem sich schnell bewegenden Fluggerät. Aus derart bei der Auswertung der Radarsignale gewonnenen Parametern werden diejenigen Parameter, die für die Bildfokussierung benötigt werden, ermittelt.

Dabei analysiert der Radarsensor einen vorgebbaren Bereich der zu überwachenden Erdoberfläche im SAR-Scanmode, im Spotlight-Mode und/oder im MTI-Mode. Wird der Radarsensor im Monopulsbetrieb betrieben, so ist eine Winkelverfolgung eines detektierten Zieles möglich. Es ist hierbei besonders vorteilhaft, daß in dem Radarsensor eine Echtzeitverarbeitung der empfangenen Signale möglich ist.

Fig. 1 zeigt einen schematischen Aufbau einer Sende-/Empfangseinheit eines Radarsensors für den mmW - Bereich (Millimeter-Wellen-Bereich). Dabei werden beispielsweise folgende Merkmale für den Radarsensor benutzt:

- Radarfrequenzbereich 35 GHz (Ka-Band),
- Modulationsverfahren: linear FM-CW,
- volle Inter-Rampen Kohärenz,
- schmal bündelnde Sende- und Empfangsantenne vom Typ Cassegrain,
- Antenne auf einer stabilisierten Plattform,
- 4-kanaliges Monopulssystem,
- zwei orthogonale Empfangspolarisationen, die mit den zwei Winkelebenen (Azimut und Elevation) gekoppelt sind.

Gemäß Fig. 1 wird ein FM-Modulationssignal mittels digitaler Direktsynthese (DDS) erzeugt und über einen Up-Konverter (UP) auf einen HF-Sender gebracht. Das Echosignal der vier Empfangskanäle wird jeweils mit dem ausgekoppelten Sendesignal abgemischt (MIX) und nach einer Tiefpaßfilterung (TP) abgetastet (digitalisiert) (A/D) (Homodynverfahren). Ein Kardansystem mit Lagestabilisierung der Antenne (Plattform) ermöglicht die Ausrichtung der Antenne über mehr als 180° im Azimut-Bereich (parallel zur Erdoberfläche) symmetrisch zur Flugrichtung (das heißt, sogenanntes "forwardlooking" und "sidelooking" nach rechts oder links sind möglich) sowie über mehr als 90° im Elevationsbereich (senkrecht zur Erdoberfläche).

Aufgrund der gewählten Bauart der Antenne entsteht eine schmale Antennencharakteristik, die für eine mögliche Zielverfolgung sowie eine gute Leistungsbilanz erforderlich ist. Eine hohe räumliche Auflösung wird durch eine dementsprechend gewählte Bandbreite des Sendesignals sowie eine daran angepaßte kohärente Integrationszeit erreicht. Der Leuchtfleck der Antenne auf der Erdoberfläche hat dort beispielsweise eine Ausdehnung von 100 m bis 150 m. Damit und mit der erwähnten Lage-stabilisierten Plattform ist beispielsweise eine mäanderförmige Abtastung in einem vorgebbaren Azimut-/Elevationsbereich möglich (Fig.2). Die Verweilzeit eines zu dektierenden und/oder klassifizierenden (Radar-)Zieles in der Antennenkeule wird im wesentlichen durch ein vorgebbares Antennensuchmuster, beispielsweise eine mäanderförmige Abtastung, bestimmt. Dabei erfordert eine Erhöhung der Dopplerauflösung eine Reduzierung der ansonsten gewählten vorgebbaren Suchstreifenbreite oder eine Unterbrechung für einen vorgebbaren kurzen Zeitraum. Derartige Unterbrechungen sind beispielsweise nötig, um ein detektiertes Ziel genau zu analysieren (klassifizieren). Das geschieht in Abhängigkeit von dem vorliegenden Zielszenarium in einem sogenannten "spotlight mode" oder in einem Suchschwenk mit einer sehr geringen vorgebbaren Schwenkgeschwindigkeit.

Der Azimutschwenk symmetrisch zur Flugrichtung wird im sogenannten MTI-Mode des Radarsensors benutzt. Dabei wird bei unveränderter Sendemodulation und Signalvorverarbeitung ein möglicherweise vorhandener Bodenclutter aufgrund der gewählten schmalen Dopplerbandbreite in dieser Blickrichtung auf wenige Auflösungszellen des Dopplerspektrums abgebildet. Fahrende (bewegte) Ziel erscheinen dann vorwiegend außerhalb dieses Bereiches im thermischen Rauschen. Die vorhandene hohe Entfernungsauflösung bleibt erhalten und wird für die Zielerkennung benutzt.

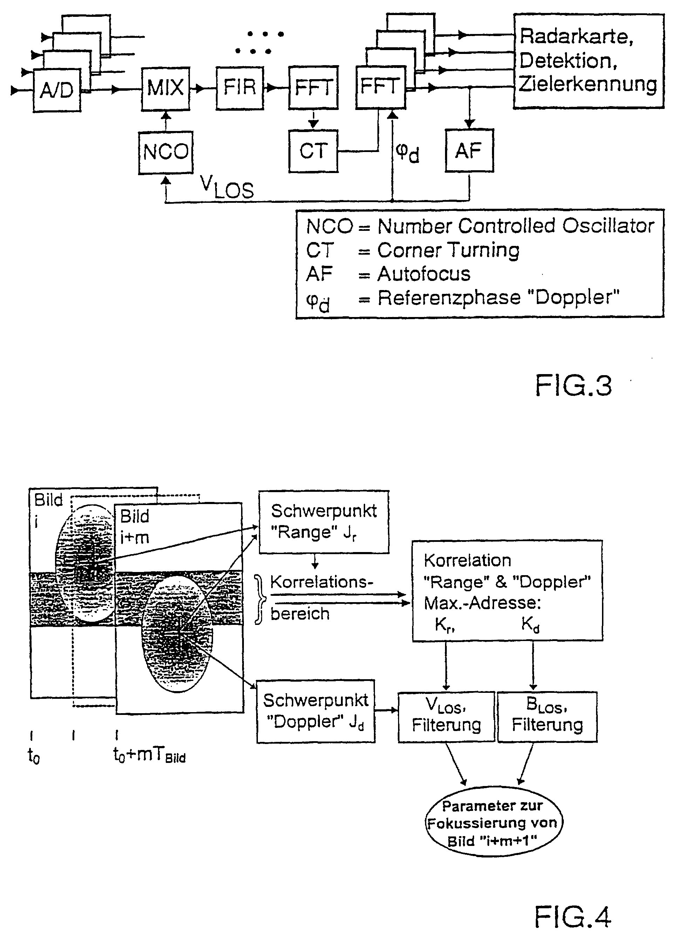

Fig. 3 zeigt eine Anordnung zur Auswertung der Empfangssignale (Echosignale). Dabei werden die vier Empfangssignale zunächst digitalisiert (A/D) und parallel verarbeitet (prozessiert). Es erfolgt zunächst eine Auswahl des Analysefensters "Range" (Entfernung) über einen digitalen Synthesizer sowie ein FIR-Filter. Vor der weiteren Signalverarbeitung wird das Signal gemäß der Bandbreitenreduzierung des FIR-Filters unterabgetastet.

Die vorhandene geringe Ausdehnung des Antennenleuchtfleckes auf der Erdoberfläche ermöglicht nach einer Phasenkompensation ein einfaches an sich bekanntes Range-Doppler-Prozessing (Entfernungs-Doppler-Verarbeitung) der Signale, da die interessierenden Objekte (Ziele) auch bei einer hohen lateralen Auflösung von beispielsweise kleiner 1 m innerhalb des Schärfentiefe-Bereiches ("depth of focus") liegen. Dabei werden in einer Blockverarbeitung in festem vorgebbarem Zeitraster einzelne sogenannte Footprint-Bilder erzeugt, die in der Apertur in vorgebbarer Weise stark überlappen und je nach Suchmuster zu größeren Bildern gemäß dem sogenannten Multilook-Prinzip zusammengesetzt werden. Die erwähnte hohe Rangeauflösung (Entfernungsauflösung) von kleiner 1 m erfordert eine sehr genaue Bestimmung der Geschwindigkeit $V_{los}$ auf der Sichtlinie. Gleiches gilt für den tieffrequenten Anteil der Beschleunigung $B_{los}$ auf der Sichtlinie, wo der Beitrag der Schwerkraft nicht genau kompensierbar ist aufgrund der nicht vermeidbaren Unsicherheit bei der Ausrichtung der Antenne.

Als tieffrequent werden hierbei Signale bezeichnet, deren höchste Frequenz kleiner ist als der Kehrwert der kohärenten Integrationszeit, die nachfolgend noch näher erläutert wird. Tieffrequente Signale liegen beispielsweise in einem Frequenzbereich von 1 Hz bis 10 Hz.

Die damit durchgeführte Autofokussierung ist derart in die Blockverarbeitung der Signale eingefügt, daß in vorteilhafter Weise zeitaufwendige Iterationen vermieden werden. Bei der Signalverarbeitung wird das aus der Literatur "Spotlight Synthetic Aperture Radar: Signal Processing Algorithms, Walter G. Carrara, Ros S. Goodman and Ronald M. Majewski, Artech House, 1995," als "mapdrift" bekannte Verfahren gemäß Fig. 4 derart geändert, daß gleichzeitig die Geschwindigkeit $V_{los}$ und der tieffrequente Anteil der Beschleunigung $B_{los}$ ermittelbar sind.

Die Detektion eines Zieles und eine Navigationsunterstützung des Fluggerätes erfolgen auf der Grundlage der inkohärent zusammengesetzten Radarbilder, während für die Zielanalyse die komplexen Einzelbilder der vier Empfangskanäle in zwei Polarisationen zur Verfügung stehen.

Die Ermittlung der Geschwindigkeit $V_{los}$ und der Beschleunigung $B_{los}$ auf der Sichtlinie wird nachfolgend näher erläutert.

Die SAR- oder DBS- Technologie kann die geforderte Auflösung zur Verfügung stellen. Dabei wird innerhalb eines kurzen Rahmentaktes $T_r$ ein Radarsignal großer Bandbreite $B_r$ mit geeigneter Modulation abgestrahlt (Sendesignal $S_r$) und dessen Echo empfangen ($E_r$), mit der Taktfrequenz $T_s$ abgetastet und verarbeitet ($N_s$ Abtastwerte innerhalb der Taktfrequenz $T_s$).

Das Sendesignal $S_r$ wird über eine vorgebbare Anzahl $N_r$ von Rahmentakten $T_r$ periodisch wiederholt. Die kohärente Verarbeitung des Empfangssignals $E_r$ führt zu einem zweidimensionaien Spektrum der Dimensionen "Entfernung" und "Doppler", wobei bei geeignet gewählter Meßgeometrie die Dopplerdimension die Ortsauflösung quer zur Entfernungsachse leistet ("Azimut").

Es gelten folgende Zusammenhänge:

$$\text{Auflösung Entfernung: } \delta R = \frac{c}{2B_r}$$
$$\text{Meßbandbreite Doppler: } B_{md} = \frac{1}{T_r}$$
$$\text{Auflösung Doppler: } \delta D = \frac{B_{md}}{N_r}$$
$$\text{Auflösung Azimut: } \delta Az = \frac{\lambda}{2\Omega}$$

c = Lichtgeschwindigkeit, $\lambda$ = Radarwellenlänge, $\Omega$ = Winkeldifferenz zum Zielobjekt innerhalb der Integrationszeit $T_{Int} = N_r T_r$.

In dem hier beschriebenen Verfahren erfolgt die Verarbeitung der $N_r$ Empfangssignale $E_r$ als zweidimensionale Fouriertransformation der Matrix

$\underline{E}_{tt} = [\ E_r(T_r) \ .... \ E_r(N_r T_r)]$ , nachdem die Phase der Matrix $\underline{E}_{tt}$ in vorgebbarer Weise korrigiert wurde. In dieser Formel und den folgenden bezeichnen doppelt unterstrichene Buchstaben eine Matrix und einfach unterstrichenen einen Vektor. Dieses sogenannte Range-Doppler-Processing gewährleistet innerhalb der durch die Formel $\Delta R \approx \frac{2\delta r^2}{\lambda}$ ($\delta r$ = Auflösung in Entfernung wie auch in Azimut) gegebenen Tiefenschärfe $\Delta R$ fokussierte Radarbilder.

Im Folgenden wird ein Verfahren zur Bestimmung der Korrekturphasen für die Matrix $\underline{\underline{E}}_{tt}$ erläutert, welches für sequentiell erzeugte Range-Doppler-Bilder einsetzbar ist.

### Randbedingungen

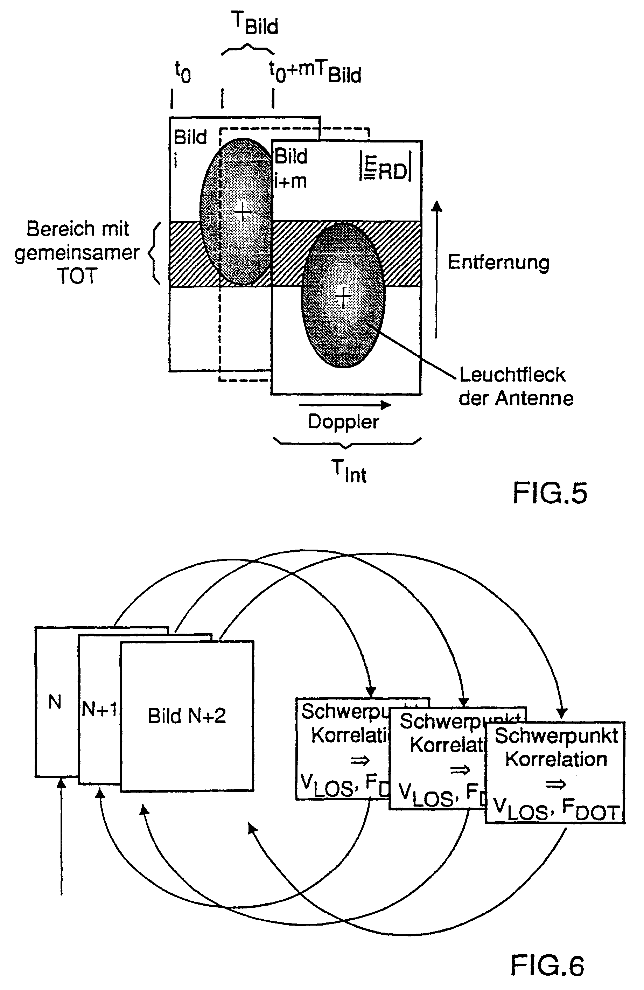

Es wird eine kohärente Integrationszeit $T_{Int}$ gewählt, die nicht länger als ungefähr 1/2 mal die Zielbeleuchtungszeit **TOT** ("**T**ime **O**n **T**arget") ist. Der Prozeß der DBS-Bilderzeugung wird in zeitlichen Abständen $T_{Bild}$ (Bildtakt) wiederholt, wobei das (nicht notwendig konstante) Zeitinterval $T_{Bild}$ so bemessen ist, daß innerhalb der Zielbeleuchtungszeit TOT mehrere DBS-Bilder berechnet werden, welche zusammen Echosignale aus der gesamten Zielbeleuchtungszeit TOT enthalten (Fig. 5).

Dieses Vorgehen wird im Folgenden als Blockverarbeitung bezeichnet, wobei jeder Block durch die Matrix $\underline{\underline{E}}_{tt}$ definiert ist.

### Signalverarbeitung

Der Prozeß der Signalverarbeitung ist in Fig.6 schematisch dargestellt. Der zeitliche Ablauf ergibt sich wie folgt:

a) Erzeugung des Spektrums von $\underline{\underline{E}}_{tt}$ :

$$\underline{\underline{E}}_{tt} \Rightarrow \underline{\underline{e}}^{i \cdot \varphi_R} \text{ o} \Rightarrow \text{FFT "Entfernung"} \Rightarrow \underline{\underline{e}}^{i \cdot \varphi_D} \text{ o} \Rightarrow$$
$$\text{FFT "Doppler"} \Rightarrow \underline{\underline{E}}_{RD}$$
oder

$$\underline{\underline{E}}_{tt} \Rightarrow \underline{\underline{e}}^{i \cdot \varphi_R} \text{ o } \underline{\underline{e}}^{i \cdot \varphi_D} \text{ o} \Rightarrow \text{FFT "Entfernung"} \Rightarrow \text{FFT "Doppler"} \Rightarrow \underline{\underline{E}}_{RD}, \text{ wobei}$$

$\underline{\underline{E}}_{RD}$ das zu der Matrix $\underline{\underline{E}}_{tt}$ gehörende Spektrum und o den Verknüpfungsoperator bedeuten.

Die Phasenkorrektur $\underline{\varphi}_r$ beträgt

$$\varphi_R(n_s,n_r) = 4\pi \cdot V_{Los} \cdot \frac{n_r \cdot T_r}{N_r} \cdot \frac{n_s}{N_s},$$

$n_s = 0...N_s-1$, $n_r = 0...N_r-1$ $V_{LOS}$ = aktueller Meßwert für die Sichtliniengeschwindigkeit
Die Phasenkorrektur $\underline{\varphi}_d$ beträgt

$$\varphi_d(n_s,n_r) = \pi \cdot F_{DOT} \cdot n_r^2,$$

$$n_r = -N_r/2...N_r/2-1$$

$F_{DOT} = \frac{2}{\lambda} B_{LOS}$, = Änderung der Dopplerfrequenz, $B_{LOS}$ = aktueller Meßwert für die Sichtlinienbeschleunigung

b) Gewinnung von $V_{LOS}$ und $F_{DOT}$ aus dem Spektrum $\underline{\underline{E}}_{RD}$ :

i) Messung des Echoschwerpunktes in "Entfernung" $J_r$ und "Doppler" $J_d$
ii) Korrelation von $|\underline{\underline{E}}_{RD}|$ ($t_0$) mit $|\underline{\underline{E}}_{RD}|$ ($t_0$-$mT_{Bild}$) entlang "Entfernung" und "Doppier", wobei die ganze Zahl **m** so gewählt ist, daß $|\underline{\underline{E}}_{RD}|$ ($t_0$) und $|\underline{\underline{E}}_{RD}|$($t_0$-$mT_{Bild}$) innerhalb der Zielbeleuchtungszeit TOT eines Punktzieles gemessen werden.

Die Korrelation erfolgt in einem Entfernungsbereich symmetrisch zum Mittelwert aus $J_r(t_0)$ und $J_r(t_0+mT_{Bild})$.
Entlang der Dimension "Doppler" erfolgt die Korrelation zyklisch.
Die Maxima der Korrelationsfunktion seien in den Lagen $K_r$ und $K_d$ in der "Entfernungs-" beziehungsweise "Doppler"-Dimension.
iii) Bestimmung von $V_{LOS}$ aus $K_r$ und $J_d$:

Der Echoschwerpunkt in "Doppler" mißt die Frequenz

$$f_{jd} = \frac{J_d}{N_r} B_{md}$$

beziehungsweise die Geschwindigkeit $R_{los} = \frac{f_{Jd}\lambda}{2}$.
Die Korrelation mißt die Geschwindigkeit

$$V_{korr} = K_r \frac{\delta R}{\Delta T} = K_r \frac{c}{2B_r m T_{Bild}}.$$

Über

$$v_{korr} \overset{!}{=} \frac{\lambda}{2}\left(f_{Jd} + M_{los} B_{md}\right) \equiv V_{LOS}$$

wird der Zweig der Mehrdeutigkeit in der Dopplerfrequenz $M_{los}$, $M_{los} \in Z$ (ganzzahlig), und damit $V_{LOS}$ ermittelt.

iv) Bestimmung von $F_{DOT}$ aus $K_d$:

$$F_{dot} = \frac{K_d}{m T_{Bild} T_{int}}$$

(MAPDRIFT Autofokus gemäß der Literatur)

c) Filterung $V_{LOS}$ und $F_{DOT}$:

Die Meßbandbreite für $\mathbf{V_{LOS}}$ und $\mathbf{F_{DOT}}$ ist $1/mT_{Bild} \approx 1/T_{int}$.

Ein vorgebbares nichtlineares Filter (Median- oder Sigma-Filter) eliminiert Störungen, die durch schlechte Meßqualität (mangelhafte Inhomogenität des Radarechos für die Korrelation) entstehen.

Der Kontrast der Korrelationsmaxima bei $\mathbf{K_r}$ beziehungsweise $\mathbf{K_d}$ steuert ein adaptives Tiefpaßfilter, so daß die resultierende Meßbandbreite $\leq 1/mT_{Bild}$ ist.

d) Erzeuge neues Bild:
$t_0 \rightarrow t_0 + \mathbf{T_{Bild}}$ ; gehe zu a)

**Erprobung des Verfahrens**

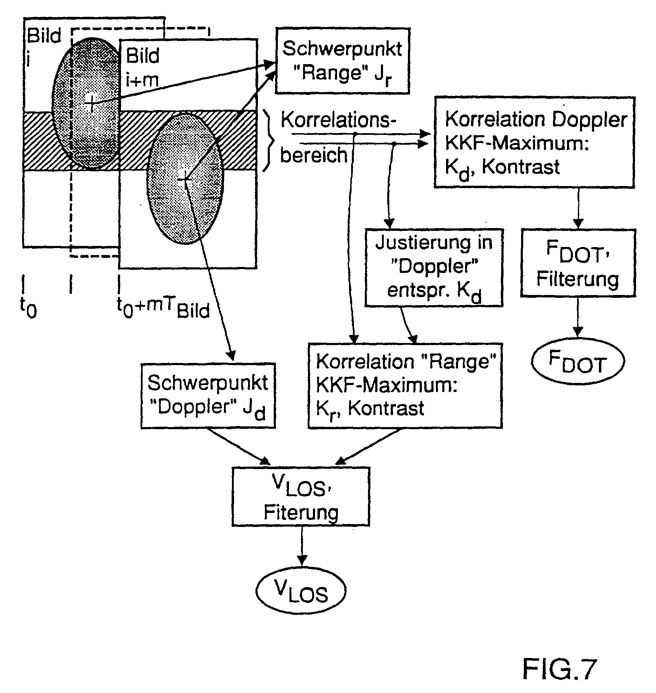

Das Verfahren wurde erfolgreich auf Meßdaten eines Ka-Band Radarsensors angewandt, wobei Auflösungen von unter 1m x 1m erzielt wurden. Je nach Meßszenarium gibt es eine "Einschwingphase" von 2 bis 15 Bildtakten, bis fokussierte Bilder gewonnen werden. Bei Stützung mit INS-Informationen kann diese Phase bedarfsweise noch verkürzt werden. Die 2-dim-Korrelation kann auf zwei 1-dim-Korrelationen zurückgeführt werden, wenn zunächst die Doppler-Korrelation durchgeführt wird und dann bei der Range-Korrelation der Dopplerversatz $\mathbf{K_d}$ berücksichtigt wird (siehe Fig.7).

Mit einem derartigen Verfahren ist beispielsweise ein Radarsensor für folgenden Einsatzbedingungen herstellbar:

- für bemannte oder unbemannte Unterschall-Fluggeräte,
- für eine Sensor-Reichweite von mehreren Kilometern,
- für eine Suchstreifenbreite von mehreren Kilometern,
- für eine autonome Zielerkennung und Zielverfolgung innerhalb des Suchbereiches, beispielsweise bei einem unbemannten Fluggerät,
- für eine genaue Zielvermessung mit einer Treffpunktauswahl,
- für eine zuverlässige Funktion der Überwachung auch bei ungünstigen Umweltbedingungen, beispielsweise schlechtem Wetter (Regen, Schnee und/oder Wolken).

Die Erfindung ist nicht auf die beschriebenen Beispiele beschränkt, sondern in vielfältiger Weise anwendbar, beispielsweise die Detektion, Klassifizierung und Verfolgung sowohl von stehenden als auch bewegten Gegenständen, beispielsweise Land- und/oder Seefahrzeugen (Schiffen).

**Patentansprüche**

1. Verfahren zur Überwachung der Erdoberfläche unter Verwendung eines Fluggerätes, das einen Radarsensor mit synthetischer Apertur besitzt, wobei

   - die Sende-/Empfangsantenne des Radarsensors derart ausgebildet wird, daß auf dem zu überwachenden Gebiet ein an eine vorgebbare räumliche Auflösung angepaßter Leuchtfleck der Antenne entsteht,

   - aus den empfangenen Radarsignalen durch Überlagerung von bezüglich der Entfernung (range) und des Doppler-Signals blockweise prozessierten Fourierspektren ein Radarbild erzeugt wird,

   - durch eine Korrelation derartiger zeitlich aufeinanderfolgender Fourierspektren in den Dimensionen Azimut sowie Elevation die Parameter Beschleunigung auf der Sichtlinie $B_{los}$ sowie Mehrdeutigkeitsfehler auf der Sichtlinie $M_{los}$ ermittelt werden,

   - durch eine Schätzung des Echoschwerpunktes des Dopplersignales innerhalb der Fourierspektren der Rest der Geschwindigkeit auf der Sichtlinie $R_{los}$ innerhalb eines Mehrdeutigkeitsbereiches ermittelt wird,

   - eine eindeutige Geschwindigkeit auf der Sichtlinie $V_{los}$ ermittelt wird gemäß der Formel

   $$V_{los} = M_{los} \cdot \lambda B_m / 2 + R_{los}$$

   mit

   $\cdot$ = Multiplikationsoperator
   $\lambda$ = Radarwellenlänge
   $B_m$ = Meßbandbreite des Radarsensors in Doppler

   und

   - aus der Beschleunigung auf der Sichtlinie ($B_{los}$) und der Geschwindigkeit auf der Sichtlinie ($V_{los}$) die für eine Bildfokussierung der Radarbilder erforderlichen Parameter Phasenkorrektur "range" ($\underline{\varphi_r}$) und Phasenkorrektur "Doppier" ($\underline{\varphi_d}$) ermittelt werden.

2. Verfahren zur Überwachung der Erdoberfläche nach Anspruch 1, **dadurch gekennzeichnet, daß** die Beschleunigung auf der Sichtlinie ($B_{los}$) und die Geschwindigkeit auf der Sichtlinie ($V_{los}$) aus tieffrequenten Signalanteilen ermittelt werden.

**3.** Verfahren zur Überwachung der Erdoberfläche nach Anspruch 2, **dadurch gekennzeichnet, daß** die tieffrequenten Signalanteile für die Beschleunigung auf der Sichtlinie ($B_{los}$) und für die Geschwindigkeit auf der Sichtlinie ($V_{los}$) mittels eines Schätzvorganges ermittelt werden.

**4.** Verfahren zur Überwachung der Erdoberfläche nach einem der vorhergehenden Ansprüche, **dadurch gekennzeichnet, daß** bei den blockweise prozessierten Fourierspektren die Blocklänge derart gewählt wird, daß innerhalb der Zielbeleuchtungszeit mindestens zwei Blöcke erfaßt werden.

**5.** Verfahren zur Überwachung der Erdoberfläche nach einem der vorhergehenden Ansprüche, **dadurch gekennzeichnet, daß** zur Ermittlung der Parameter Beschleunigung auf der Sichtlinie ($B_{los}$) und Geschwindigkeit auf der Sichtlinie ($V_{los}$) die Korrelation bezüglich mindestens eines vorgebbaren Spektralbereiches erfolgt.

**6.** Verfahren zur Überwachung der Erdoberfläche nach einem der vorhergehenden Ansprüche, **dadurch gekennzeichnet, daß** der Echoschwerpunkt des Dopplersignales innerhalb der Fourierspektren den Schätzwert für den Rest der Geschwindigkeit auf der Sichtlinie ($R_{los}$) innerhalb des Mehrdeutigkeitsbereiches darstellt.

**7.** Verfahren zur Überwachung der Erdoberfläche nach einem der vorhergehenden Ansprüche, **dadurch gekennzeichnet, daß** die tieffrequenten Signalanteile der Geschwindigkeit auf der Sichtlinie ($V_{los}$) und der Beschleunigung auf der Sichtlinie ($B_{los}$) durch eine Filterung aus den im Verarbeitungstakt ermittelten Schätzwerten gewonnen werden, wobei die Grenzfrequenz kleiner als der Wert $1/T_{int}$ gewählt wird und $T_{int}$ die kohärente Integrationszeit bedeutet.

**Claims**

**1.** A method for monitoring the earth's surface using a flying device which has a radar sensor with synthetic aperture, wherein

- the transmitting/receiving antenna of the radar sensor is designed in such a way that a light spot of the antenna adapted to a specifiable spatial resolution forms on the area to be monitored,

- a radar image is produced from the received radar signals by superimposing Fourier spectra processed block by block with respect to the range and the Doppler signal,

- the parameters of acceleration on the line of sight $B_{los}$ and ambiguity errors on the line of sight $M_{los}$ are determined by correlating chronologically sequential Fourier spectra of this kind in the dimensions of azimuth and elevation,

- the residual speed on the line of sight $R_{los}$ within an ambiguity range is determined by estimating the echo centre of gravity of the Doppler signal within the Fourier spectra,

- an unambiguous speed on the line of sight $V_{los}$ is determined in accordance with the formula

$$V_{los} = M_{los} \cdot \lambda B_m/2 + R_{los}$$

where

$\cdot$ = multiplication operator
$\lambda$ = radar wavelength
$B_m$ = measuring bandwidth of the radar sensor in Doppler

and

- the parameters of "range" phase correction ($\varphi_r$) and "Doppler" phase correction ($\varphi_d$) required for image focusing of the radar images are determined from the acceleration on the line of sight ($B_{los}$) and the speed on the line of sight ($V_{los}$).

**2.** A method for monitoring the earth's surface according to Claim 1, **characterised in that** the acceleration on the line of sight ($B_{los}$) and the speed on the line of sight ($V_{los}$) are determined from low frequency signal components.

**3.** A method for monitoring the earth's surface according to Claim 2, **characterised in that** the low frequency signal components for the acceleration on the line of sight ($B_{los}$) and for the speed on the line of sight ($V_{los}$) are determined by means of an estimation process.

**4.** A method for monitoring the earth's surface according to one of the preceding Claims, **characterised in that** with regard to the Fourier spectra processed block by block, the block length is selected in such a way that at least two blocks are detected within the target illumination time.

**5.** A method for monitoring the earth's surface according to one of the preceding Claims, **characterised in that**, in order to determine the parameters of acceleration on the line of sight ($B_{los}$) and speed on the line of sight ($V_{los}$), the correlation is effected with respect to at least one specifiable region of the spectrum.

**6.** A method for monitoring the earth's surface according to one of the preceding Claims, **characterised in that** the echo centre of gravity of the Doppler signal within the Fourier spectra represents the estimate for the residual speed on the line of sight ($R_{los}$) within the ambiguity range.

**7.** A method for monitoring the earth's surface according to one of the preceding Claims, **characterised in that** the low frequency signal components of the speed on the line of sight ($V_{los}$) and the acceleration on the line of sight ($B_{los}$) are obtained by means of filtering from the estimates determined in the processing cycle, wherein the cut-off frequency is selected less than the value $1/T_{int}$ and $T_{int}$ signifies the coherent integration time.

## Revendications

**1.** Procédé destiné à l'observation de la surface de la terre en utilisant un engin volant équipé d'un détecteur radar à ouverture synthétique, dans lequel

- l'antenne d'émission et de réception du détecteur radar est agencée de telle sorte qu'un spot lumineux d'antenne adapté à une résolution spatiale pouvant être prédéterminée soit engendré sur la zone à observer,
- une image radar est générée à partir des signaux radar reçus, par la superposition de spectres de Fourier traités par blocs en ce qui concerne la distance range et le signal Doppler,
- les paramètres d'accélération sur la ligne de collimation $B_{los}$, ainsi que des défauts d'ambiguïté sur la ligne de collimation $M_{los}$, sont déterminés par une corrélation de tels spectres de Fourier se succédant dans le temps dans les dimensions azimut ainsi qu'élévation,
- le reste de la vitesse sur la ligne de collimation $R_{los}$ est déterminé à l'intérieur d'une zone d'ambiguïté par une évaluation du barycentre de l'écho du signal Doppler à l'intérieur des spectres de Fourier,
- une vitesse sans équivoque sur la ligne de collimation $V_{los}$ est déterminée selon la formule :

$$V_{los} = M_{los} \cdot \lambda B_m/2 + R_{los},$$

avec

- • = opérateur de multiplication
- λ = longueur d'onde radar
- $B_m$ = largeur de bande de mesure du détecteur radar en Doppler

et
- les paramètres correction de phase "range" ($\varphi_r$) et correction de phase "Doppler" ($\varphi_d$) nécessaires pour une focalisation des images radar sont déterminés à partir de l'accélération sur la ligne de collimation ($B_{los}$) et de la vitesse sur la ligne de collimation ($V_{los}$).

**2.** Procédé destiné à l'observation de la surface de la terre selon la revendication 1, **caractérisé en ce que** l'accélération sur la ligne de collimation ($B_{los}$) et la vitesse sur la ligne de collimation ($V_{los}$) sont déterminées à partir de composantes basse fréquence des signaux.

**3.** Procédé destiné à l'observation de la surface de la terre selon la revendication 2, **caractérisé en ce que** les composantes basse fréquence des signaux pour l'accélération sur la ligne de collimation ($B_{los}$) et pour la vitesse sur la ligne de collimation ($V_{los}$) sont déterminées au moyen d'un processus d'évaluation.

**4.** Procédé destiné à l'observation de la surface de la terre selon l'une quelconque des revendications précédentes, **caractérisé en ce que** pour les spectres de Fourier traités par blocs, la longueur de bloc est choisie de telle sorte que deux blocs au moins soient saisis à l'intérieur du temps d'éclairage de la cible.

**5.** Procédé destiné à l'observation de la surface de la terre selon l'une quelconque des revendications précédentes, **caractérisé en ce que** la corrélation d'au moins une zone spectrale pouvant être prédéterminée est effectuée pour la détermination des paramètres d'accélération sur la ligne de collimation ($B_{los}$) et de vitesse sur la ligne de collimation ($V_{los}$).

**6.** Procédé destiné à l'observation de la surface de la terre selon l'une quelconque des revendications précédentes, **caractérisé en ce que** le barycentre de l'écho du signal Doppler à l'intérieur des spectres de Fourier représente la valeur estimative pour le reste de la vitesse sur la ligne de collimation ($R_{los}$) à l'intérieur de la zone d'ambiguïté.

**7.** Procédé destiné à l'observation de la surface de la terre selon l'une quelconque des revendications précédentes, **caractérisé en ce que** les composantes basse fréquence des signaux de la vitesse sur la ligne de collimation ($V_{los}$) et de l'accélération sur la ligne de collimation ($B_{los}$) sont obtenues par un filtrage des valeurs estimatives déterminées dans la cadence de traitement, la fréquence limite étant choisie afin d'être inférieure à la valeur $1/T_{int}$, et $T_{int}$ signifiant le temps d'intégration cohérent.

FIG.1

FIG.2

**FIG.3**

NCO = Number Controlled Oscillator
CT = Corner Turning
AF = Autofocus
$\varphi_d$ = Referenzphase "Doppler"

**FIG.4**

$$T_{Bild}$$

$t_0$      $t_0+mT_{Bild}$

Bild
i

Bild
i+m

$|\underline{\underline{E}}_{RD}|$

Bereich mit
gemeinsamer
TOT

Entfernung

Leuchtfleck
der Antenne

Doppler

$T_{Int}$

## FIG.5

N

N+1

Bild N+2

Schwerpunkt
Korrelation
$\Rightarrow$
$V_{LOS}, F_{DOT}$

Schwerpunkt
Korrelation
$\Rightarrow$
$V_{LOS}, F_{DOT}$

Schwerpunkt
Korrelation
$\Rightarrow$
$V_{LOS}, F_{DOT}$

## FIG.6

Bild
i

Bild
i+m

$t_0$

$t_0 + mT_{Bild}$

Schwerpunkt
"Range" $J_r$

Korrelationsbereich

Korrelation Doppler
KKF-Maximum:
$K_d$, Kontrast

Justierung in
"Doppler"
entspr. $K_d$

$F_{DOT}$,
Filterung

$F_{DOT}$

Schwerpunkt
"Doppler" $J_d$

Korrelation "Range"
KKF-Maximum:
$K_r$, Kontrast

$V_{LOS}$,
Fiterung

$V_{LOS}$

FIG.7